# FASCICULE DE BREVET EUROPEEN

(11) **EP 0 527 689 B1**
(45) Date de publication et mention de la délivrance du brevet: **04.01.1995**
(21) Numéro de dépôt: 92420218.7
(22) Date de dépôt: 25.06.1992
(51) Int. Cl.: B65G 35/06, B61B 13/12

(54) **Dispositif de transfert linéaire à plateaux libres**
Lineare Fördervorrichtung mit freien Trägerplatten
Linear conveyor device with free supporting trays

(30) Priorité: 14.08.1991 FR 9110461
(43) Date de publication de la demande: 17.02.1993
(73) Titulaire: ELCOM, F-38300 Bourgoin-Jallieu (FR)
(72) Inventeur: Teillon, Alain, F-38300 Bourgoin-Jallieu (FR); Dailler, Didier, F-38080 l'Isle d'Abeau (FR)
(74) Mandataire: Maureau, Philippe

(56) Documents cités:
- EP-A- 0 109 459
- EP-A- 0 417 041
- DE-U- 8 813 730

## Description

La présente invention a pour objet un dispositif de transfert linéaire a plateaux libres.

Les dispositifs de transfert linéaire sont couramment utilisés dans les ateliers d'assemblage pour amener des pièces ou des articles en cours de réalisation d'un poste à un autre poste. Un tel dispositif comprend une ligne de convoyage munie d'éléments d'entraînement, tels que des bandes sans fin tournant continuellement de manière à entraîner des plateaux qui portent les pièces ou articles à déplacer d'un poste à un autre. A partir d'une ligne principale de convoyage, il est connu de prévoir des lignes de dérivation qui partent à angle droit, ou en formant un angle' différent de 90°. Le problème à résoudre est de réaliser le passage d'un plateau d'une ligne de convoyage sur une autre.

Une première solution consiste à détecter la présence d'un plateau au niveau de la dérivation, à arrêter ce plateau, puis à réaliser sa translation, par exemple sous la poussée d'un verin en vue de le faire passer sur une autre ligne de transfert.

Une autre solution consiste, après arrêt du plateau à réaliser le soulèvement de celui-ci puis sa prise en charge par une autre ligne de transfert. En outre, dans le cas ou la ligne de convoyage possède une forme générale rectangulaire, il convient de prévoir dans les angles des éléments d'entraînement supplémentaires, possèdant leur propre motorisation. Ces différentes solutions sont complexes, chères et peu flexibles. En effet, dans le cadre d'une installation existante, il n'est pas possible de réaliser simplement et rapidement la mise en place d'une nouvelle dérivation. Effectivement, les plateaux étant guidés par des rebords latéraux solidaires du bâti de la machine, il convient, au niveau de chaque dérivation, de réaliser une interruption de ce rebord nécessitant une interruption importante de l'exploitation et un démontage de la pièce considérée pour sa transformation.

Le but de l'invention est de fournir un dispositif de transfert linéaire à plateaux libres permettant la mise en place de lignes de dérivation de façon simple, économique, et modulaire, c'est-à-dire ne nécessitent pas une transformation importante d'une installation déjà existante pour l'équiper d'une ligne de dérivation.

A cet effet, le dispositif qu'elle concerne, du type comprenant au moins une ligne de convoyage comportant des éléments, tels que bandes sans fin ou autres fonctionnant en continu et destinés à entraîner des plateaux qui reposent sur elle, et au moins une ligne de dérivation, de même structure générale que la ligne principale, et raccordée à elle en formant un angle, est caractérisé en ce que :
- d'une part, chaque plateau comporte, faisant saillie de sa face inférieure, quatre pions escamotables, disposés deux à deux symétriquement par rapport à l'axe du plateau, à proximité des bords avant et arrière de celui-ci, et
- d'autre part, la ligne comporte au niveau de chaque raccordement, des moyens de guidage, entre la ligne principale et la ligne raccordée, des pions situés à l'intérieur du virage, et sur la ligne principale, dans la zone de raccordement, du côté opposé à la ligne raccordée, une rampe inclinée de bas et haut jusqu'au plan des éléments de convoyage, située sur la trajectoire des pions et destinée à réaliser l'escamotage des pions situés à l'extérieur du virage.

En outre, les deux séries de pions situées des deux côtés de chaque plateau coopérent directement avec le bâti support des éléments d'entraînement pour réaliser le guidage du plateau.

Lorsqu'un plateau déplacé sur la ligne principale arrive au niveau d'une ligne de dérivation, ses deux pions situés du côté intérieur au virage sont guidés pour prendre ce virage et faire passer le plateau de la ligne principale à la ligne de dérivation, tandis que les deux autres pions sont escamotés, et glissent en position escamotée au-dessus de la ligne principale, avant de reprendre leur position sortie lorsque le plateau se trouve sur la ligne de dérivation. Il doit être noté que le guidage des plateaux étant réalisé par les pions eux-mêmes qui coopérent directement avec le bâti, il n'est pas nécessaire, lors de la mise en place d'une ligne de dérivation, de procéder au démontage des éléments de guidage utilisés traditionnellement.

Avantageusement, les moyens de guidage des pions situés du côté intérieur au virage sont constitués par une rampe.

Cette rampe peut par exemple être constituée par une rainure débouchant dans la face supérieure d'une pièce fixée sur le bâti, à l'intérieur de l'angle formé par la ligne principale et la ligne dérivée.

Selon un mode de réalisation de ce dispositif, aux moyens de guidage des pions du côté de l'intérieur du virage est associée une rampe déplaçable verticalement permettant, suivant sa position, l'escamotage ou non des pions, tandis que la rampe située à l'extérieur de la ligne principale, dans la zone de raccordement, est également déplaçable verticalement, une rampe étant levée lorsque l'autre est abaissée et inversement.

Cet agencement permet, dans la mesure où cela est souhaité, de ne réaliser la dérivation que de certains plateaux préalablement repérés, ou par exemple d'un plateau sur deux. Dans ce cas, les deux rampes associées respectivement à l'intérieur du virage et à l'extérieur de la ligne principale sont actionnées pour permettre soit l'escamotage des pions situés du côté intérieur au virage, auquel cas le plateau demeure sur la ligne principale, soit l'escamotage des pions disposés du côté extérieur de la ligne principale, auquel cas le plateau passe de la ligne principale sur la ligne de dérivation.

Avantageusement, dans la mesure où le bâti comporte une partie centrale ouverte ou évidée par rapport aux éléments d'entraînement, une plaque est disposée, au niveau de la zone de raccordement, dans le plan des éléments d'entraînement, pour servir à l'appui des pions escamotés.

Ceci évite que les pions passent de leur position escamotée en position sortie, dans la partie centrale du bâti, les pions sortant soit sous l'action de la seule gravité, soit sous l'action de ressorts qui peuvent leur être associés.

Conformément à une autre caractéristique de l'invention, chaque plateau comporte une partie inférieure en matière synthétique dans laquelle sont ménagés des trous de guidage des pions et une partie supérieure métallique permettant la fixation des pièces transportées, la détection de position et l'indexage des plateaux.

Cet agencement permet de disposer d'une partie en matière synthétique, suffisamment épaisse pour permettre le logement des pions, assurant un bon glissement sur les bandes, lors des accumulations de plateaux, limitant les bruits lors des chocs des plateaux les uns contre les autres, tandis que la partie supérieure métallique permet une bonne fixation des pièces transportées, ainsi que la détection éventuelle de la position du plateau et son indexage ou positionnement précis en vue de réaliser certaines opérations définies.

De toute façon, l'invention sera bien comprise à l'aide de la description qui suit, en référence aux dessins schématiques annexés représentant, à titre d'exemples, non limitatifs, deux formes d'exécution de ce dispositif :
Figure 1 est une vue de dessus d'un dispositif de transfert linéaire comportant deux lignes parallèles reliées par une ligne transversale ;
Figure 2 est une vue en coupe transversale d'une ligne principale et d'un plateau supporté par celle-ci, selon la ligne II-II de figure 1 ;

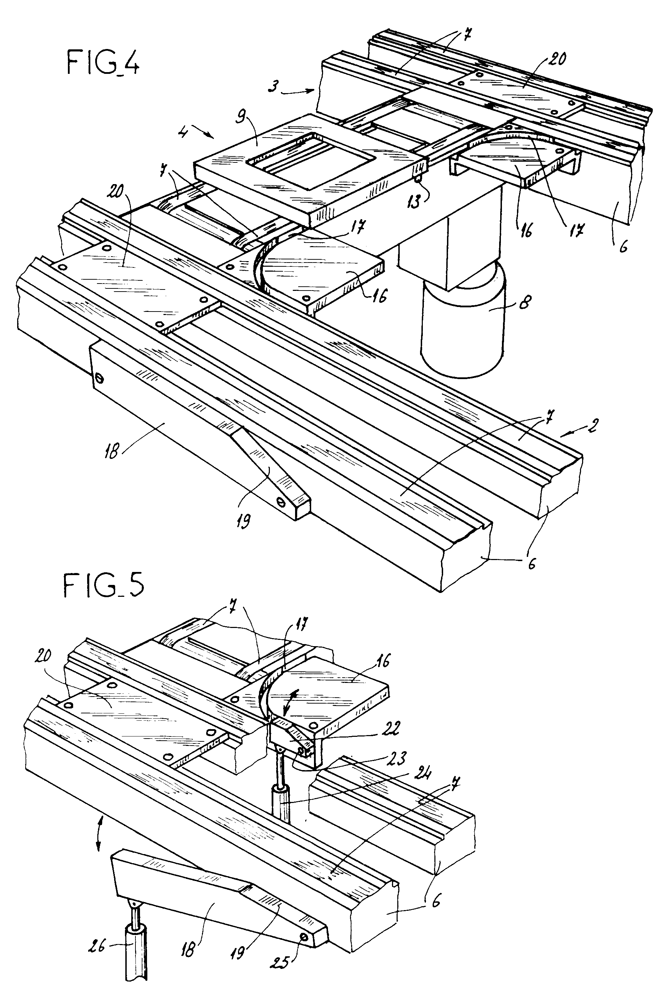

Figure 3 est une vue similaire à figure 2, au cours du passage d'un plateau d'une ligne à une autre, selon la ligne III-III de figure 1 ;
Figure 4 est une vue en perspective d'une ligne transversale, et de ses zones de raccordement à deux lignes principales parallèles ;
Figure 5 est une vue en perspective représentant une variante d'exécution de la zone de raccordement entre une ligne principale et la ligne transversale.

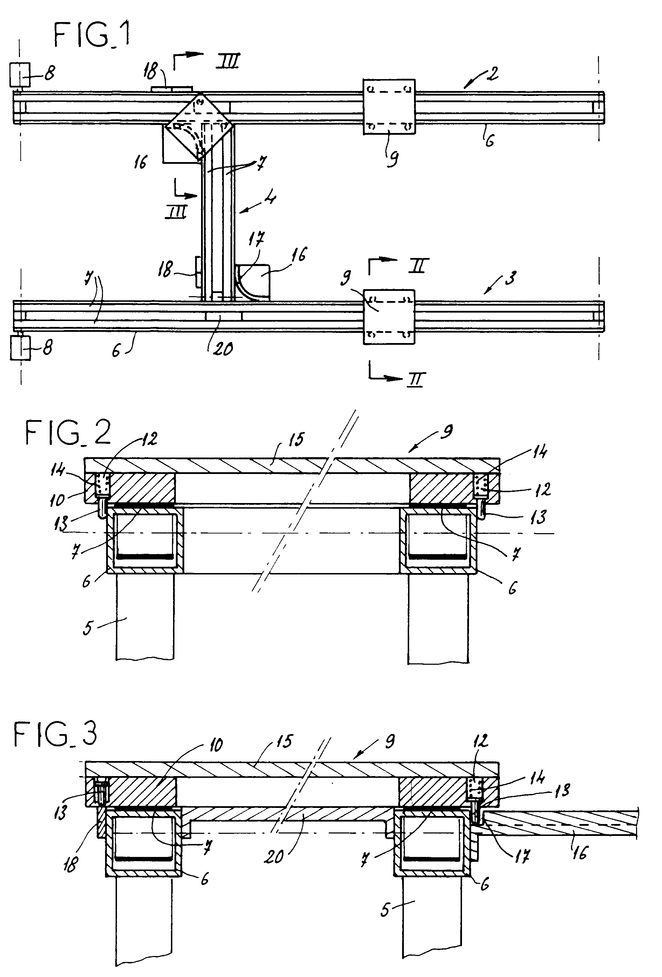

La figure 1 représente un dispositif de transfert linéaire comportant deux lignes principales 2 et 3, parallèles et reliées l'une à l'autre par une ligne transversale ou ligne de dérivation 4. Chaque ligne comporte, comme montré au dessin, un bâti 5 présentant à sa partie supérieure deux tubes horizontaux et parallèles 6, dont chacun sert au guidage d'une bande sans fin 7 entraînée par un moteur 8.

Ce dispositif sert au transfert de plateaux libres 9, comportant chacun une partie inférieure 10 en matière synthétique, dans laquelle sont ménagés quatre trous 12 débouchant vers le bas, servant au logement de pions 13 maintenus poussés vers le bas chacun par un ressort 14. Ces quatre pions sont disposés à proximité des deux bords latéraux du plateau, ainsi qu'à proximité des deux extrémités avant et arrière de celui-ci. Ils sont deux à deux symétriques par rapport au plan médian longitudinal du plateau. Sur l'embase 10 en matière synthétique est fixée une partie supérieure 15 en acier, servant elle-même au montage des pièces à transporter, la totalité de la surface de la partie supérieure 15 étant disponible, puisque les pions n'apparaissent absolument pas dans cette partie supérieure.

Comme montré notamment à la figure 2, le guidage de chaque plateau est réalisé par appui des pions 13 sur les faces latérales des tubes 6 du bâti, ne nécessitant pas le recours à des rebords spécifiques solidaires du bâti. Au niveau de chaque zone de dérivation, le bâti est équipé, à l'intérieur de l'angle formé par une ligne principale 2 et la ligne transversale 4, d'une pièce 16, dans laquelle est ménagée une rainure 17, qui sert à réaliser le guidage des pions 13 du plateau 9, situés du côté de l'intérieur du virage, pour permettre le passage d'un plateau d'une ligne à une autre.

Comme montré également au dessin, dans la zone de raccordement entre deux lignes, il est prévu sur la face extérieure de la ligne sur laquelle un plateau est guidé initialement, une pièce 18 comportant une partie inclinée 19 de bas en haut, et depuis un niveau correspondant à l'extrémité basse des pions 13, jusqu'à un niveau correspondant au plan supérieur des éléments de convoyage. Cette pièce 18 est disposée en amont même de la zone de raccordement, de telle sorte que les deux pions 13 situés du même côté d'un plateau soient en position totalement escamotée lorsqu'ils arrivent dans la zone même de raccordement. Dans cette zone de raccordement, il est prévu, entre les deux tubes 6 du bâti, une plaque 20 située dans le plan des bandes transporteuses 7.

En pratique, lorsqu'un plateau se trouve sur la ligne principale 2, par exemple, il est guidé par ses pions 13 sur les deux tubes 6. Lorsqu'il arrive à proximité du raccordement avec la ligne transversale 4, les deux pions 13 situés du côté opposé à la ligne 4, s'escamotent au contact de la rampe 18, 19, et les deux pions 13 situés du côté de l'intérieur du virage, sont guidés dans la rainure 17 de la pièce 16, afin de faire passer le plateau de la ligne 2 par exemple à la ligne 4. Au cours de ce passage, les pions 13 escamotés glissent sur la plaque 20. Lorsque le plateau se trouve dans l'alignement de la ligne transversale 4, les deux pions 13 situés à l'extérieur du virage, sortent de nouveau et participent au guidage du plateau 9 sur la ligne transversale 4.

La figure 5 représente une variante d'exécution de ce dispositif, dans laquelle, à la rainure 17, est associée une rampe 22 montée articulée autour d'un axe 23, et actionnée en rotation par un vérin 24. La pièce 18 est, pour sa part, montée articulée autour d'un axe horizontal 25, et actionnée par un vérin 26. Le mouvement de commande des vérins 24 est tel que lorsque la rampe 18 est en position basse, la rampe 22 est en position haute et inversement.

L'exemple qui a été décrit précédemment correspond au cas où la rampe 18 est en position haute, et la rampe 22 est en position basse, permettant le passage d'un plateau de la ligne 2 à la ligne 4. Si, au contraire, on souhaite que le plateau amené sur la ligne 2 demeure sur la ligne 2, il convient d'actionner les vérins 24 et 26 pour que la rampe 22 passe en position haute et la rampe 18 passe en position escamotée. Dans ce cas, les pions 13, situés du côté de la pièce 16, s'escamotent, tandis que les pions 13 situés de l'autre côté du plateau demeurent en position sortie, assurant le guidage du plateau le long de la ligne 2, au passage de la zone de raccordement avec la ligne 4.

Comme il ressort de ce qui précède, l'invention apporte une grande amélioration à la technique existante en fournissant un dispositif de conception simple, permettant un raccordement très rapide, et pour un coût réduit de ligne raccordée à une ligne principale.

Comme il va de soi, l'invention ne se limite pas aux seules formes d'exécution de ce dispositif décrites ci-dessus à titre d'exemples, elle en embrasse au contraire toutes les variantes. C'est ainsi, notamment, que les éléments transporteurs pourraient être constitués par des chaînes, ou des rouleaux, que les pions pourraient être situés non pas à l'extérieur des tubes 6, mais à l'intérieur de ceux-ci, ou encore que les lignes raccordées à la ligne principale pourraient ne pas former un angle droit avec elles sans que l'on sorte pour autant du cadre de l'invention.

## Revendications

1. Dispositif de transfert linéaire à plateaux libres, comprenant au moins une ligne de convoyage (2) comportant des éléments, tels que bandes sans fin (7) ou autres, fonctionnant en continu et destinés à entraîner des plateaux (9) qui reposent sur elle, et au moins une ligne de dérivation (4), de même structure générale que la ligne principale (2), et raccordée à elle en formant un angle, caractérisé en ce que :
- d'une part, chaque plateau (9) comporte, faisant saillie de sa face inférieure, quatre pions escamotables (13), disposés deux à deux symétriquement par rapport à l'axe du plateau, à proximité des bords avant et arrière de celui-ci, et
- d'autre part, la ligne (2) comporte, au niveau de chaque raccordement, des moyens de guidage entre la ligne principale et la ligne raccordée des pions (13) situés à l'intérieur du virage, et sur la ligne principale (2), dans la zone de raccordement, du côté opposé à la ligne raccordée, une rampe (18, 19) inclinée de bas et haut jusqu'au plan des éléments de convoyage, située sur la trajectoire des pions (13) et destinée à réaliser l'escamotage des pions situés à l'extérieur du virage.

2. Dispositif selon la revendication 1, caractérisé en ce que les deux séries de pions (13) situées des deux côtés de chaque plateau (9) coopèrent directement avec le bâti support (6) des éléments d'entraînement (7) pour réaliser le guidage du plateau (9).

3. Dispositif selon l'une quelconque des revendications 1 et 2, caractérisé en ce que les moyens de guidage des pions situés du côté intérieur au virage sont constitués par une rampe.

4. Dispositif selon l'une quelconque des revendications 1 et 2, caractérisé en ce que les moyens de guidage des pions (13) situés du côté intérieur au virage sont constitués par une rainure (17) débouchant dans la face supérieure d'une pièce (16) fixée sur le bâti.

5. Dispositif selon l'une quelconque des revendications 1 à 4, caractérisé en ce qu'aux moyens de guidage des pions (13) du côté de l'intérieur du virage est associée une rampe (22) déplaçable verticalement permettant, suivant sa position, l'escamotage ou non des pions, tandis que la rampe (18) située à l'extérieur de la ligne principale, dans la zone de raccordement est également déplaçable verticalement, une rampe (18, 22) étant levée lorsque l'autre est abaissée et inversement.

6. Dispositif selon l'une quelconque des revendications 1 à 5, caractérisé en ce que dans la mesure ou le bâti (5) comporte une partie centrale ouverte ou évidée par rapport aux éléments d'entraînement (7), une plaque (20) est disposée, au niveau de la zone de raccordement, dans le plan des éléments d'entraînement, pour servir à l'appui des pions (13) escamotés.

7. Dispositif selon l'une quelconque des revendications 1 à 6, caractérisé en ce que chaque plateau (9) comporte une partie inférieure (10) en matière synthétique dans laquelle sont ménagés des trous (12) de guidage des pions (13) et une partie supérieure (15) métallique permettant la fixation des pièces transportées, la détection de position et l'indexage des plateaux.

## Claims

1. A linear transfer device with free plates, comprising at least one conveying line (2) comprising elements such as endless belts (7) or the like, operating continuously and intended to entrain plates (9) which are supported thereon, and at least one deviation line (4) of the same general structure as the main line (2) and connected thereto forming an angle, characterised in that:
- on the one hand, each plate (9) comprises, projecting from its lower face, four retractable lugs (13), disposed in pairs symmetrically with respect to the axis of the plate, in the proximity of the front and rear edges thereof, and
- on the other hand, the line (2) comprises, at each connection, means for guiding, between the main line and the connected line, the lugs (13) located on the inside of the turn, and on the main line (2), in the connecting area, on the side opposite the connected line, a slope (18, 19) which is inclined from bottom to top, up to the plane of the conveying elements, is located on the trajectory of the lugs (13) and is intended to cause the retraction of the lugs located on the outside of the turn.

2. A device according to claim 1, characterised in that the two series of lugs (13) located on the two sides of each plate (9) cooperate directly with the support frame (6) of the entrainment elements (7) in order to guide the plate (9).

3. A device according to either of claims 1 and 2, characterised in that the means for guiding the lugs located on the inner side of the turn are comprised of a slope.

4. A device according to either of claims 1 and 2, characterised in that the means for guiding the lugs (13) located on the inner side of the turn are comprised of a groove (17) opening into the upper surface of a piece (16) fixed to the frame.

5. A device according to any of claims 1 to 4, characterised in that a slope (22) is associated with the means for guiding the lugs (13) on the inner side of the turn and is vertically displaceable permitting, according to its position, the lugs to be retracted or not, while the slope (18) located outside the main line, in the connecting area, is also vertically displaceable, one slope (18, 22) being raised when the other is lowered and vice versa.

6. A device according to any of claims 1 to 5, characterised in that, in as far as the frame (5) comprises a central part which is open or recessed with respect to the entrainment elements (7), a plate (20) is disposed in the connecting area, in the plane of the entrainment elements in order to serve as a support for the retracted lugs (13).

7. A device according to any of claims 1 to 6, characterised in that each plate (9) comprises a lower part (10) of synthetic material in which holes (12) are provided for guiding the lugs (13) and an upper metallic part (15) permitting the fixing of the transported pieces, the detection of position and the indexing of the plates.

## Patentansprüche

1. Lineare Fördervorrichtung mit freien Trägerplatten, beinhaltend mindestens eine Förderstrecke (2), die Förderelemente wie Endlosbänder (7) oder andere aufweist, die kontinuierlich arbeiten und dazu bestimmt sind, auf ihnen ruhende Trägerplatten (9) anzutreiben, sowie mit mindestens einer Abzweigstrecke (4) gleichen generellen Aufbaus wie die Hauptförderstrecke (2), die an diese unter Bildung eines Winkels angebunden ist, dadurch gekennzeichnet, daß:
einerseits jede Trägerplatte (9), von ihrer Unterfläche vorspringend, vier versenkbare Leitstücke (13) aufweist, die jeweils zwei zu zwei symmetrisch bezuglich der Achse der Trägerplatte in der Nähe ihres vorderen und hinteren Randes angeordnet sind, und
andererseits im Bereich jeder Anbindung Führungsmittel zwischen der Hauptförderstrecke und der angebundenen Strecke für die auf der Kurveninnenseite liegenden Leitstücke (13) aufweist und in der Anbindungszone auf der der angebundenen Strecke abgewandten Seite an der Hauptförderstrecke (2) eine von unten nach oben bis zur Höhenlage der Förderelemente geneigte Rampe (18, 19) vorgesehen ist, die in der Wegbahn der Leitstücke (13) liegt und dazu bestimmt ist, auf der Außenseite der Kurve liegende Leitstücke zu versenken.

2. Vorrichtung nach Anspruch 1, dadurch gekennzeichnet, daß die beiden Reihen von Leitstücken (13), die an den beiden Seiten einer jeder Trägerplatte (9) liegen, direkt mit dem Traggestell (6) der Antriebselemente (7) zwecks Führung der Trägerplatte (9) zusammenwirken.

3. Vorrichtung nach einem der Ansprüche 1 und 2, dadurch gekennzeichnet, daß die Führungsmittel für die Leitstücke, die auf der Innenseite der Kurven liegen, durch eine Rampe gebildet sind.

4. Vorrichtung nach einem der Ansprüche 1 und 2, dadurch gekennzeichnet, daß die Führungsmittel für die Leitstücke (13), die auf der Innenseite der Kurve liegen, durch eine Nut (17) gebildet sind, die in der oberen Fläche eines auf dem Gestell befestigten Teiles (16) mündet.

5. Vorrichtung nach einem der Ansprüche 1 bis 4, dadurch gekennzeichnet, daß den Führungsmitteln der Leitstücke (13) auf der Innenseite der Kurve eine vertikal verlagerbare Rampe (22) zugeordnet ist, die, je nach ihrer Lage, das Versenken oder das Nichtversenken der Leitstücke ermöglicht, während die Rampe (18), die auf der Außenseite der Hauptförderstrecke in der Anbindungszone liegt, ebenfalls vertikal verlagerbar ist, wobei eine der Rampen (18, 22) angehoben ist, wenn die andere abgesenkt ist, und umgekehrt.

6. Vorrichtung nach einem der Ansprüche 1 bis 5, dadurch gekennzeichnet, daß in dem Ausmaß, in dem das Gestell (5) einen mittleren offenen oder ausgenommenen Bereich bezüglich der Antriebselemente (7) aufweist, im Bereich der Anbindungszone eine Platte (20) in der Ebene der Antriebselemente zur Abstützung der versenkten Leitstücke (13) vorgesehen ist.

7. Vorrichtung nach einem der Ansprüche 1 bis 6, dadurch gekennzeichnet, daß jede Trägerplatte (9) einen unteren Abschnitt (10) aus Kunststoff aufweist, in dem Führungslöcher (12) für die Leitstücke (13) vorgesehen sind, sowie einen oberen metallischen Abschnitt (15), der die Befestigung der zu transportierenden Teile, die Lagefeststellung und die Indexierung der Trägerplatten ermöglicht.
